# EUROPÄISCHE PATENTSCHRIFT

(11) **EP 1 241 400 B1**
(45) Veröffentlichungstag und Bekanntmachung des Hinweises auf die Patenterteilung: **14.03.2007**
(21) Anmeldenummer: 02450020.9
(22) Anmeldetag: 31.01.2002
(51) Int. Cl.: F21S 8/12, F21V 13/04

(54) **Fahrzeugscheinwerfer**
Vehicle headlamp
Projecteur pour véhicule

(30) Priorität: 13.03.2001 AT 3962001
(43) Veröffentlichungstag der Anmeldung: 18.09.2002
(73) Patentinhaber: Zizala Lichtsysteme GmbH, A-3250 Wieselburg (AT)
(72) Erfinder: Aichinger, Michael, 3620 Spitz a.d. Donau (AT)
(74) Vertreter: Matschnig, Franz

(56) Entgegenhaltungen:
- EP-A- 1 070 912
- DE-A1- 19 906 580
- DE-C- 305 151
- DE-C1- 3 340 462
- US-A- 5 440 456

## Beschreibung

Die Erfindung betrifft einen Fahrzeugscheinwerfer mit zumindest einem Freiformreflektor und zumindest einer in einem Bereich eines inneren Brennpunktes angeordneten Lichtquelle, bei dem eine Hell-Dunkelgrenze einer Lichtverteilung durch eine Reflexion im wesentlichen von Licht erzeugt ist, welches aus einem vorderen, dem Reflektor abgewandten Bereich der Lichtquelle über einen unteren Bereich des Reflektors in den Außenraum des Scheinwerfers reflektiert ist, sowie von Licht, welches aus einem hinteren Bereich der Lichtquelle über einen oberen Bereich des Reflektors in den Außenraum des Scheinwerfers reflektiert ist, und der Reflektor im Endlichen liegende Brennpunkte aufweist, welche im wesentlichen auf zumindest einer Brennlinienkurve liegen, wobei die Linse zumindest in im wesentlichen vertikaler Richtung eine zerstreuende Wirkung hat.

Ein ähnlicher Scheinwerfer für Kraftfahrzeuge ist aus der DE 199 06 580 A1 bekannt. Dieser Scheinwerfer umfasst einen Reflektor und zumindest eine in einem Bereich eines inneren Brennpunktes angeordnete Lichtquelle. Die Hell-Dunkelgrenze einer Lichtverteilung wird durch eine Reflexion im wesentlichen von Licht erzeugt, welches aus einem vorderen, dem Reflektor abgewandten Bereich der Lichtquelle über einen unteren Bereich des Reflektors in den Außenraum des Scheinwerfers reflektiert wird, sowie von Licht, welches aus einem hinteren Bereich der Lichtquelle über einen oberen Bereich des Reflektors in den Außenraum des Scheinwerfers reflektiert wird. Weiters weist der Reflektor im Endlichen liegende Brennpunkte auf welche im wesentlichen auf zumindest einer Brennlinienkurve liegen.

Herkömmliche Projektionsscheinwerfer bestehen aus zumeist einem Ellipsoidreflektor, einer Linse, und weiters unter Umständen aus einer Blendenanordnung. Dieses optische System ist in einem Scheinwerfergehäuse angeordnet, welches von einer Abdeckscheibe abgedeckt ist.

Auf der anderen Seite existieren die sogenannten Freiformscheinwerfer, bestehend aus einem Freiflächenreflektor, d.h. einem Reflektor, der keine mathematisch definierte Form aufweist, sowie in der einfachsten Form noch aus einer Abdeckscheibe. Dabei bildet der Reflektor gleichzeitig das Scheinwerfergehäuse, welches über Dichtungen mit der Abdeckscheibe verbunden ist. Eine Hell-Dunkelgrenze etwa für eine Abblendlichtverteilung wird dadurch erzeugt, dass ein hinteres Wendelende einer Lichtquelle über den oberen Bereich des Reflektors und ein vorderes Wendelende über den unteren Bereich in einem Bereich vor einem Fahrzeug abgebildet wird.

Beispielsweise verwendet werden in solchen Scheinwerfern längliche, lineare Lichtquellen, die in der oder parallel zur optischen Achse verlaufen. Pro vertikalem Schnitt durch den Reflektor, wobei die Vertikalschnittebenen im allgemeinen unter verschiedenen Winkeln zu der optischen Achse verlaufen, liegen die Abbildungen des dem Reflektor zugewandten Lichtquellenendes über oberhalb der Horizontalebene durch die optische Achse liegende Reflektorbereiche auf einer Abbildungsfläche höher und die Abbildungen des vom Reflektor abgewandten Lichtquellenendes tiefer. Weiters liegen die Abbildungen des vom Reflektor abgewandten Lichtquellenendes über unterhalb der Horizontalebene durch die optische Achse liegende Reflektorbereiche auf einer Abbildungsfläche höher und die des dem Reflektor zugewandten Lichtquellenendes tiefer. Dabei soll z.B. bei einen Nebelscheinwerfer das hintere Lichtquellenende bei einer Abbildung über einen Punkt der oberen Reflektorhälfte nicht nur höher, sondern an der Hell-Dunkel-Grenze liegen, ebenso wie das vordere Lichtquellenende bei einer Abbildung über einen Punkt der oberen Reflektorhälfte tiefer, aber auch an der Hell-Dunkel-Grenze liegen soll. Die Trennlinie zwischen oberer und unterer Reflektorhälfte ist in der Regel die Horizontalebene durch die optische Achse, d.h. bei einem Fern- oder Nebelscheinwerfer - bei einem Abblendscheinwerfer nach ECE nur im Bereich der waagrechten HD-Linie (asymmetrisch) ist sie eine quasihorizontale Grenzkurve.

Im Gegensatz zu den oben beschriebenen Projektionsscheinwerfern stellen Freiformscheinwerfer eine in der Herstellung preisgünstigere Alternative zu Projektionsscheinwerfern dar, da die Linse und die Strahlenblende entfallen können.

Nachteilig an Freiflächenreflektoren ist, dass bei kleinen Lichtaustrittsflächen oftmals nicht das gesamte von dem Reflektor stammende Licht für die Lichtverteilung vor dem Fahrzeug herangezogen werden kann, was auf die Qualität der Lichtverteilung insbesondere hinsichtlich der Helligkeit nachteilige Effekte mit sich bringt. Eine Erhöhung des aus dem Scheinwerfers austretenden Lichtstroms kann zwar auf einfache Weise durch Vergrößerung der Lichtaustrittsfläche erreicht werden, ist allerdings häufig wegen der Beschaffenheit der Karosserie oder durch Vorgaben hinsichtlich des Designs nicht möglich.

Es ist eine Aufgabe der Erfindung, einen Scheinwerfer für Fahrzeuge zu schaffen, der einerseits in der Herstellung relativ preisgünstig ist, und der andererseits bei einer relativ geringen Lichtaustrittsöffnung eine hohe Ausbeute des Lichtstroms ermöglicht bzw. eine im Vergleich zu herkömmlichen Freiformscheinwerfern höhere Ausbeute erlaubt.

Diese Aufgabe wird ausgehend von einem Scheinwerfer der eingangs erwähnten Art dadurch gelöst, dass erfindungsgemäß die Linse zumindest in im wesentlichen vertikaler Richtung eine zerstreuende Wirkung hat.

Bei dem erfindungsgemäßen Scheinwerfer ist eine Lichtquelle in bekannter Weise in einem Bereich eines ersten Brennpunktes des Reflektors angeordnet. Nach der Erfindung weist der Scheinwerfer noch weitere im Endlichen liegende Brennpunkte auf, in welche das Licht von einem vorderen bzw. hinteren Ende der Lichtquelle gebündelt wird und so eine Hell-Dunkel-Grenze im Lichtbild erzeugt. Auf eine Strahlenblende bzw. eine Blendenanordnung kann daher bei dem erfindungsgemäßen Scheinwerfer verzichtet werden, da die Hell-Dunkelgrenze beispielsweise für Abblendlicht von dem entsprechend ausgebildeten Freiflächenreflektor erzeugt ist. Zusätzlich wird durch die zerstreuende Wirkung der Linse Licht, welches aus Reflektorbereichen stammt, die üblicherweise nicht für die Lichtverteilung heranziehbar sind, so gestreut, dass es den Lichtstrom erhöht und so zu einer besseren Ausleuchtung der Fahrbahn vor dem Fahrzeug führt.

Durch das erfindungsgemäße Merkmal, dass die Linse zumindest in im wesentlichen vertikaler Richtung eine zerstreuende Wirkung hat, kann der über den Reflektor reflektierte Lichtstrom optimal ausgenützt werden, da dadurch auch Licht von Reflektorbereichen, die oberhalb oder unterhalb der Projektion der Linse bzw. der Lichtaustrittsöffnung auf den Reflektor liegen, für die Lichtverteilung herangezogen werden.

Um eine gesetzeskonforme Erzeugung einer Lichtverteilung bei einer vernünftigen Baugröße des Scheinwerfers realisieren zu können, ist es günstig, wenn der Abstand innerer Brennpunkt des Reflektors - äußere Brennpunkte bzw. Brennlinienkurve in einem Bereich von 100 mm - 500 mm liegt.

Besonders zweckmäßig ist es in diesem Zusammenhang, wenn der Abstand innerer Brennpunkt des Reflektors- äußere Brennpunkte bzw. Brennlinienkurve in einem Bereich von 250 mm - 300 mm liegt.

Bei einer konkreten, erprobten Ausführung des Reflektors beträgt der Abstand innerer Brennpunkt des Reflektors- äußere Brennpunkte bzw. Brennlinienkurve 270 mm beträgt.

Bei einer vorteilhaften Ausführungsform der Erfindung ist dabei die Linse zumindest hinsichtlich im wesentlichen vertikaler Schnitte als Konkavlinse ausgebildet ist.

Beispielsweise ist die Linse als Meniskenlinse ausgebildet.

Um eine möglichst große Lichtmenge mit der Linse sammeln und gleichzeitig eine gesetzeskonforme Lichtverteilung erzeugen zu können, ist es günstig, wenn der Abstand Linseäußere Brennpunkte bzw. Brennlinienkurve zumindest ein Fünftel des Abstandes innerer Brennpunkt des Reflektors - äußere Brennpunkte bzw. Brennlinienkurve ist.

Bei einer konkreten, erprobten Ausführungsform der Erfindung beträgt beispielsweise der Abstand Linse - äußerer Brennpunkt bzw. Brennlinienkurve 150 mm.

Weiters beträgt der Abstand Linse - innerer Brennpunkt des Reflektors bzw. Lichtquellenmitte 120 mm beträgt.

Eine erprobte Linse ist dadurch gekennzeichnet, dass eine dem Reflektor zugewandte Innenfläche der Linse als Segment einer Kugeloberfläche ausgebildet ist, und eine Außenfläche der Linse so ausgebildet ist, dass von einem vorderen/hinteren Bereich der Lichtquelle stammende, in dem Brennpunkt fokussierte Lichtstrahlen im wesentlichen parallel zu einer Horizontalebene ausgerichtet werden.

Der Reflektor ist bei einer Ausführungsform in bekannter Weise so ausgebildet, dass ein sogenannter "Kreuzstrahler"-Effekt auftritt, der eine besonders gute Breitenausleuchtung einer Fahrbahn etc. erlaubt. Um diesen Effekt optimal ausnutzen zu können, hat die Linse hinsichtlich horizontaler Schnitte im wesentlichen planparalleles Austrittsverhalten der durchtretenden Lichtstrahlen. Durch die Linse durchtretende Lichtstrahlen werden durch die Linse aufgrund ihrer Ausbildungsform entweder nicht abgelenkt oder in horizontaler Richtung im wesentlichen nur parallel abgelenkt, sodass der beschriebene Effekt nicht beeinträchtig wird.

Im Sinne einer Gestaltung eines homogenen Lichtbildes sowie einer weiteren Verbesserung der Breitenausleuchtung sind vorteilhafterweise an zumindest einer Linsenfläche optische Streuelemente vorgesehen.

Zweckmäßigerweise sind dabei die optischen Streuelemente an der Linseninnenfläche vorgesehen.

Bei einer anderen Ausführungsform der Erfindung ist in Lichtrichtung vor der Linse eine Scheibe angeordnet ist, welche auf zumindest einer Seite optische Streuelemente aufweist. Beispielsweise sind dabei die Streuelemente an der dem Reflektor zugewandten Fläche der Scheibe angeordnet. Dies hat den Vorteil, dass man die Scheibe aus Glas herstellen kann, was auf Grund der hohen Temperaturen im Scheinwerfer von Vorteil ist, während außen für die Linse steinschlagsicherer Kunststoff verwendet werden kann. Außerdem können auf diese Weise optische Verzerrungen, wie sie manchmal bei in der inneren Linsenfläche angebrachten Stablinsen auftreten, vermieden werden.

Beispielsweise sind die Streuelemente als Vertiefungen und/oder Erhebungen in der Linsenfläche ausgebildet.

Die Streuelemente können auch als Stablinsen ausgebildet sein.

Bei einer einfachen Ausführungsform sind die Streuelemente durch ein oder mehrere Rillen gebildet, wobei beispielsweise die Rillen im wesentlichen parallel zu einer Vertikalebene durch die optische Achse verlaufen.

Für ein gesetzeskonformes Lichtbild ist es weiters günstig, wenn die Linse in einem oberen und/oder unteren Bereich dicker ausgebildet ist als in einem mittleren Bereich. Durch diese Ausgestaltung der Linse werden Strahlen von einem hinteren/vorderen Wendelende über die obere/untere Reflektorhälfte, die in einem oberen/unteren Bereich durch die Linse durchtreten, im wesentlichen parallel zu einer Horizontalebene gerichtet, während andere Strahlen, die durch den mittleren Bereich der Linse durchtreten, in dieser Hinsicht im wesentlichen unbeeinflusst bleiben.

Im folgenden ist die Erfindung an Hand der Zeichnung näher erläutert. In dieser zeigen
- Fig. 1: eine perspektivische, schematische Darstellung eines erfindungsgemäßen Scheinwerfers,
- Fig.2: einen schematischen Schnitt durch einen Scheinwerfer entlang einer durch die optische Achse verlaufenden Vertikalebene,
- Fig.3: einen schematischen Schnitt durch einen Scheinwerfer entlang einer durch die optische Achse verlaufenden Horizontalebene,
- Fig.4: einen Schnitt durch einen beispielhaften Scheinwerfer entlang einer durch die optische Achse verlaufenden Vertikalebene,
- Fig.5: einen Schnitt durch einen beispielhaften Scheinwerfer entlang einer durch die optische Achse verlaufenden Horizontalebene,
- Fig.6: eine Veranschaulichung der geometrischen Zusammenhängen betreffend die Positionierung der Linse,
- Fig. 7: einen horizontalen Schnitt durch eine erste Ausgestaltung einer für die Erfindung verwendeten Linse,
- Fig. 8: einen weiteren horizontalen Schnitt durch eine zweite Ausgestaltung einer für die Erfindung verwendeten Linse,
- Fig. 9: eine perspektivische Ansicht einer konkreten Ausführungsform eines erfindungsgemäßen Scheinwerfers,
- Fig. 10: einen Vertikalschnitt einen Scheinwerfer nach der Fig. 9, und
- Fig. 11: einen Horizontalschnitt durch einen Scheinwerfer nach der Fig. 9.

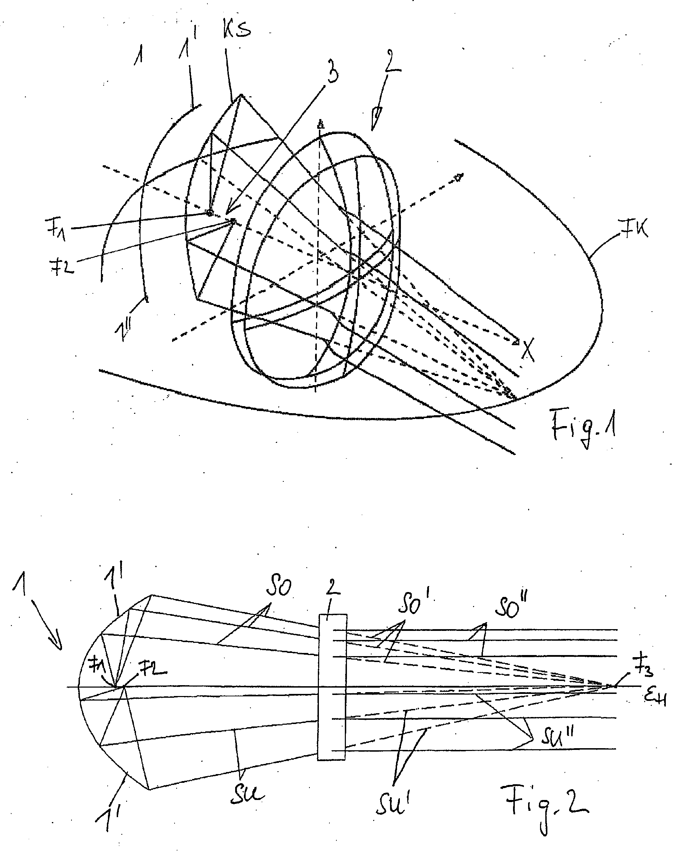

Die Fig. 1 zeigt schematisch einen Scheinwerfer mit einem Reflektor 1 sowie einer in Lichtrichtung vor diesem angeordneten linearen Lichtquelle 3 mit einem hinteren, dem Reflektor 1 zugewandten Lichtquellenende F1 sowie einem vorderen Lichtquellenende F2. Die Lichtquelle 3 weist dabei beispielsweise eine Wendel auf, und im folgenden wird oftmals auch der Begriff "Wendelende" gleichbedeutend mit Lichtquellenende verwendet; grundsätzlich kann aber auch beispielsweise eine Gasentladungslampe verwendet werden, mit einer als Lichtbogen zwischen zwei Elektroden ausgebildeten Lichtquelle.

Bei dem verwendeten Reflektor 1 handelt es sich um einen sogenannten Freiflächenreflektor, d.h. um einen Reflektor, der keine regelmäßige symmetrische Form aufweist. Vielmehr wird die reflektierende, das Lichtbild erzeugende Oberfläche eines solchen Reflektors rechnerisch an das gewünschte Lichtbild angepasst. Üblicherweise weist ein solcher Scheinwerfer lediglich eine klare Abschlussscheibe zur Abdeckung auf, und eine entsprechende Lichtverteilung wird lediglich mit dem Reflektor erreicht. Die Hell-Dunkellinie entsteht dabei - wie dies auch bereits in der Beschreibungseinleitung ausführlich erläutert wurde - durch die Abbildung des hinteren, dem Reflektor zugewandeten Endes F1 der Wendel der Fahrzeugleuchte 3 über die obere Reflektorhälfte 1' sowie durch Abbildung des vorderen Wendelendes F2 über die untere Reflektorhälfte 1" in einer Entfernung von 25 m vor dem Fahrzeug. Dabei kann bekanntlich eine Entfernung von 25 m im allgemeinen einer Abbildung im Unendlichen gleichgesetzt werden.

Weiters ist der Reflektor so ausgelegt, dass das hintere Wendelende F1 über die untere Reflektorhälfte 1" unterhalb der Hell-Dunkelgrenze am unteren Ende des Lichtbildes abgebildet wird, während der zwischen dem hinteren Wendelende F1 und dem vorderen Wendelende F2 liegende Wendelbereich über die untere Reflektorhälfte 1" unterhalb der Hell-Dunkel-Grenze zwischen dieser und dem untersten Bereich des Lichtbildes abgebildet wird. Genauso wird das vordere Wendelende F2 über die obere Reflektorhälfte 1' unterhalb der Hell-Dunkelgrenze am unteren Ende des Lichtbildes abgebildet, und der zwischen dem vorderen und dem hinteren Wendelende liegende Wendelbereich wird über die obere Reflektorhälfte 1' unterhalb der Hell-Dunkel-Grenze, zwischen dieser und dem unteren Ende des Lichtbildes abgebildet. Weiters wird die untere Wendelkante über den mittleren Bereich des Reflektors an der Hell-Dunkel-Grenze abgebildet, während die obere Kante in einem unteren Bereich des Lichtbildes zu liegen kommt. Zwischen der Ober- und Unterkante der Wendel bzw. Lichtquelle liegende Bereiche werden über den mittleren Reflektorbereich zwischen der Hell-Dunkelgrenze und dem unteren Bereich des Lichtbildes abgebildet.

Ziel der Erfindung ist es, einen solchen Standard-Freiformscheinwerfer dahingehend zu modifizieren, dass bei gleichbleibender Größe der Lichtaustrittsöffnung eine bessere Lichtausbeute und Lichtqualität erreicht wird. Dazu wird gemäß der Erfindung der Reflektor dahingehend "modifiziert", dass die von einem hinteren Wendelende über die obere Reflektorhälfte bzw. von einem vorderen Wendelende über die untere Reflektorhälfte kommenden Strahlen in im Endlichen liegenden Brennpunkten gebündelt werden, wie dies später noch eingehender erläutert wird. Ein typischer Wert für eine solche Brennweite liegt im Bereich von etwa 270 mm, aber auch andere Werte sind wie weiter unten dargestellt möglich. Weiters ist bei dem erfindungsgemäßen Scheinwerfer in Lichtrichtung vor der Lichtquelle 3 und dem Reflektor 1 zumindest eine lichtzerstreuende Wirkung aufweisende Linse 2 angeordnet. Auf diese Weise kann neben den lichttechnischen Vorteilen auch noch ein teures, linsenartiges Design des Scheinwerfers erzeugt werden. Bei einer zweckmäßigen Ausführungsform der Erfindung ist dabei die Streuscheibe als Linse 2 ausgebildet. Durch die Gestaltung des Reflektors 1 kann beispielweise eine Strahlenblende, welche für die Bildung einer Hell-Dunkel-Linie - etwa bei Abblendlichtscheinwerfern - zuständig ist, entfallen. Zur Bildung der Hell-Dunkel-Linie wird somit das Freiflächenprinzip verwendet und zusätzlich wird zur Erzeugung des Lichtbildes auch noch die Linse 2, die wie oben bereits angedeutet auch Streuscheibe sein kann, mit berücksichtigt.

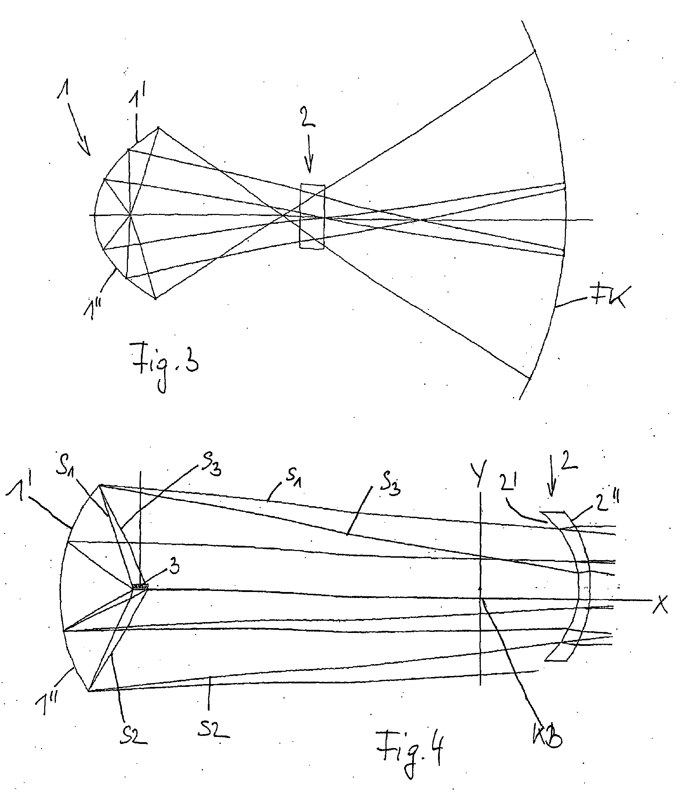

Bei dem gezeigten Scheinwerfer handelt es sich um einen Scheinwerfer für Abblendlicht, die Lichtquelle 3 liegt, wie insbesondere der Fig. 4 gut zu entnehmen ist, nicht genau auf der optischen Achse X sondern ist um einen halben Wendeldurchmesser nach oben verschoben, sodass der untere Rand des Wendelzylinders im Bereich der optischen Achse zu liegen kommt. Es sei hier aber angemerkt, dass der Scheinwerfer genauso für Fernlicht verwendet werden kann. Der Unterschied zu dem gezeigten Abblendlichtscheinwerfer liegt bei einem Nebelscheinwerfer vor allem in der Position der Lichtquelle 3 in Bezug auf die optische Achse. Bei einem Fernlichtscheinwerfer kommt weiters noch hinzu, dass der oben beschriebene Wechsel des Überganges von vorderem auf hinteres Wendelende im Lichtbild bei einem Übergang von oberer auf untere Reflektorhälfte nicht stattfindet. Die Fernlichtwendel wird daher mit ihrer Mitte genau in den inneren Brennpunkt des Scheinwerfers eingepasst, während die Abblend- oder Nebellichtwendel zwischen einen vorderen und einen hinteren Berechnungspunkt des Reflektors, die nahe an den Wendelenden F1, F2 liegen oder mit diesen zusammenfallen, eingepasst werden.

Die Auswirkungen der zusätzlichen Linse 2 zu dem Freiflächenreflektor 1 sind schematisch in den Figuren 2 und 3 an Hand eines vertikalen sowie eines horizontalen Schnittes entlang der optischen Achse X durch den Scheinwerfer dargestellt. Wie man erkennen kann, werden von einem hinteren/vorderen Wendelende F1, F2 der Lichtquelle 3 Strahlen emittiert und über die obere/untere Reflektorhälfte 1', 1" abgestrahlte Strahlen SO, SU ohne Linse in einem Brennpunkt F3 gebündelt, wie dies an Hand der in der Fig. 2 strichliert dargestellten Strahlen SO', SU' gezeigt ist. Der Brennpunkt F3 befindet sich dabei im Endlichen und liegt auf einer sogenannten Brennlinienkurve FK, wie diese etwa in Fig. 1 oder 3 zu erkennen ist. Der Begriff der Brennlinienkurve wird weiter unten noch eingehend erläutert. Wird nun gemäß der Erfindung eine Linse 2 in den Strahlengang gebracht, so werden die durch die Linse 2 durchtretenden, von dem vorderen oder hinteren Wendelende der Lichtquelle stammenden Strahlen SO, SU von der Linse 3 abgelenkt und im wesentlichen parallel zu einer Horizontalebene ε_{H} ausgerichtet (Strahlen SO", SU"), wie dies der Fig. 2 zu entnehmen ist.

Erweitert man diese Vorstellung dahingehend, dass nicht mehr nur einzelne Vertikalschnitte durch den Scheinwerfer sondern dieser in seiner Gesamtheit betrachtet wird, so heißt dies, dass gemäß der Erfindung alle Strahlen, die ausgehend von einem vorderen oder hinteren Ende der Lichtquelle 3 über den Reflektor abgestrahlt werden und auf einer Brennlinienkurve, wie dies dem Horizontalschnitt nach der Fig. 3 zu entnehmen ist, gebündelt werden, parallel zu der Horizontalebene gerichtet werden. Bei der Brennlinienkurve FK handelt es sich dabei um eine Punktmenge aller Brennpunkte von Schnittkurven KS des Reflektors 1, wobei die Brennlinienkurve FK in einer Horizontalebene ε_{H} liegt. Eine Schnittkurve KS, beispielsweise dargestellt in Fig. 1, von welcher ausgehend die Strahlen in einem Brennpunkt auf der Brennlinienkurve gebündelt werden, entsteht dabei als Schnitt des Reflektors mit einer Vertikalebene, welche normal auf eine Horizontalebene durch die optische Achse verläuft. Verschiedene Schnittkurven entstehen dabei als Schnitt des Reflektors mit verschiedenen solcher Vertikalebenen, wobei die Vertikalebenen unter in der Regel verschiedenen Horizontalwinkeln entsprechend der gewünschten Ausstrahlrichtung des Reflektors in dem jeweiligen Bereich verlaufen.

Die Horizontalebene ε_{H}, in welcher die Brennlinienkurve liegt, verläuft durch die optische Achse. Bei den Vertikalschnitten handelt es sich nicht jeweils nur um einen Vertikalschnitt, der sich durchgehend über die gesamte Höhe des Reflektors erstreckt, sondern um jeweils zwei vertikale Schnitte, je einen für eine oberhalb und eine unterhalb der Horizontalebene ε_{H} liegende Reflektorhälfte 1', 1". Die Schnittkurven der beiden Vertikalebenen, die wie schon gesagt unter einem bestimmten Winkel zu der optischen Achse verlaufen, berühren sich in der Horizontalebene ε_{H}. Um eine einfache Fertigung des Scheinwerfers zu ermöglichen, sind diese Übergänge vorzugsweise stetig differenzierbar. Alle von dem vorderen oder hinteren Wendelende kommenden Strahlen, die auf diesen beiden ineinander übergehenden Schnittkurven liegen, erfahren durch den Reflektor dieselbe seitliche Ablenkung und werden deshalb jeweils im selben Brennpunkt auf der Brennlinienkurve gebündelt, während Strahlen aus dem Bereich zwischen den beiden Wendelenden über den Reflektor in Lichtrichtung vor der Brennlinienkurve und deshalb im Lichtbild unterhalb der Hell-Dunkel-Grenze zu liegen kommen.

Bei der Brennlinienkurve FK handelt es sich dabei um eine im allgemeinen beliebige Kurve, die allerdings im "Endlichen" liegt, d.h. dass für alle bzw. die Mehrzahl der Vertikalschnitte durch den Reflektor der jeweilige Brennpunkt für einen Schnitt im Endlichen liegt, wobei allerdings die Brennlinienkurve FK in Lichtrichtung gesehen außerhalb der Linse 2 liegt. Für eine Berechnung des Reflektors wird üblicherweise von zwei Brennlinienkurven ausgegangen, einer Kurve für die obere und einer anderen Kurve für die untere Reflektorhälfte, und ausgehend von diesen beiden Brennlinienkurven wird die Form der jeweiligen Reflektorhälfte berechnet.

Bei einer erprobten und einfachen Ermittlung der Reflektorform wird dabei für die Form der Brennlinienkurve eine Kreisgestalt angenommen, sodass sich für alle Vertikalschnitte die gleiche Brennweite ergibt. Als Kreismittelpunkt wird für den "Brennlinienkreis" für die obere Reflektorhälfte das hintere Wendelende F1 verwendet, während für die untere Reflektorhälfte als Kreismittelpunkt für die Brennlinienkurve das vordere Wendelende verwendet wird. Typische Werte für den Radius der Brennlinienkurve(n) und somit für die Brennweite des Reflektors bzw. der jeweiligen Reflektorhälfte liegen bei etwa 270 mm, es sind aber ohne weiteres Werte in einem Bereich von 100 mm - 500 mm denkbar.

Die beiden Brennlinienkurven sind, wie bereits oben angesprochen, um den Abstand der beiden Wendelenden F1, F2 bzw. genaugenommen um den Abstand der beiden Berechnungspunkte, zwischen welche die Wendel eingepasst wird, zueinander versetzt. Dabei handelt es sich um einen relativ geringen Betrag verglichen mit dem "Radius" der Brennlinienkurven, weshalb in diesem Text und auch in der Zeichnung zumeist nur eine Brennlinienkurve dargestellt ist.

Betreffend die Positionierung der Linse sei insbesondere auf die Fig. 6 verwiesen. Diese zeigt schematisch einen Reflektor R mit einem inneren Brennpunkt W, einer Linse L sowie einem äußeren Brennpunkt B, wobei es sich bei diesem um einen von mehreren, im allgemeinen unendlich vielen, auf einer Brennlinienkurve (Brennpunktekurve) liegenden Brennpunkt B handelt. Für die folgenden Überlegungen kann W auch das Wendelmittel der Lichtquelle sein, wobei üblicherweise nur geringe oder keine Abstände zwischen dem Wendelmittel und dem inneren Brennpunkt des Reflektors R auftreten. Mit RM ist weiters der oberste, lichttechnisch nutzbare Punkt des Reflektors R bezeichnet; falls dieser bekannt ist, ergibt sich damit auch die Reflektorhöhe H1 als Normalabstand optische Achse X - oberster Reflektorpunkt RM.

Mit α ist der Winkel zwischen einem von dem Wendelmittel (inneren Brennpunkt des Reflektors) W ausgehenden, gedachten Strahl SW, der über den äußersten, höchsten Punkt RM des Reflektors R reflektiert wird, und der optischen Achse X bezeichnet. Der reflektierte Strahl SB wird ohne Linse L in dem äußeren Brennpunkt B gebrochen. In der Praxis ist der Wert für den Winkel α kleiner als 120°, α ≤ 120°. Für den Winkel β, der den Winkel zwischen der optischen Achse X und dem (gedachten) reflektierten Strahl SB bezeichnet, gilt β ≤ 35°. Der Abstand Wendelmittel - Linse beträgt wie bereits weiter oben angesprochen, etwa d(WB) ≈ 100 mm - 500 mm. Die Linse L kann zwischen dem Wendelmittel W und dem Brennpunkt B im Grunde beliebig angeordnet werden, mit der optisch sinnvollen Einschränkung, dass der Abstand Linse - äußerer Brennpunkt, d(BL) >≈ d(WB)/5 ist. Die Höhe H2 der Linse bzw. der optische nutzbare Bereich der Linse L ergibt sich dann automatisch, wie aus der Fig. 6 zu erkennen ist.

Bei einer konkreten Ausführungsform beträgt beispielsweise der Abstand d(BL) zwischen der Linse und einem äußeren Brennpunkt des Reflektors auf der Brennlinienkurve 150 mm, während der Abstand d(WL) des Wendelmittels der Lichtquelle zu der Linse 120 mm beträgt. Der Abstand d(WB) Wendelmittel - (virtueller) Brennpunkt der Linse ergibt sich somit zu 270 mm (bzw. der Abstand hinteres/vorderes Wendelende zu der entsprechenden Brennlinienkurve beträgt 270 mm). Zur Abstandsberechnung wird bei der Linse von jenem Punkt ihrer Außenseite ausgegangen, der sich mit der optischen Achse schneidet, ebenso wie der äußere Brennpunkt des Reflektors auf der optischen Achse liegt. Mit Wendelmittel ist genau gesprochen die die Wendel erzeugende Unterkante bezeichnet.

Je kürzer die Brennweite der Linse, um so mehr Licht kann gesammelt werden, allerdings wird die Linse außen dicker und ist dann nicht mehr vernünftig produzierbar.

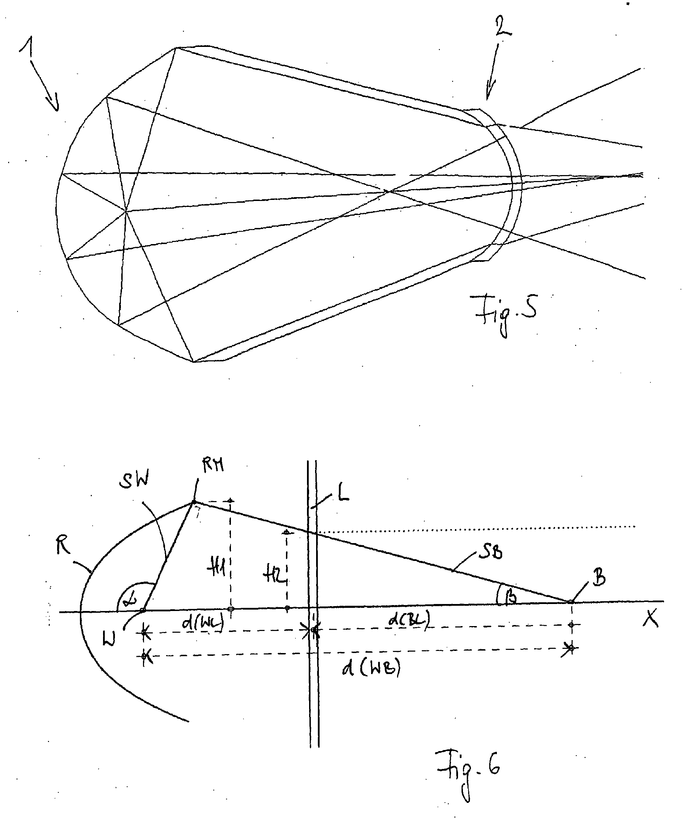

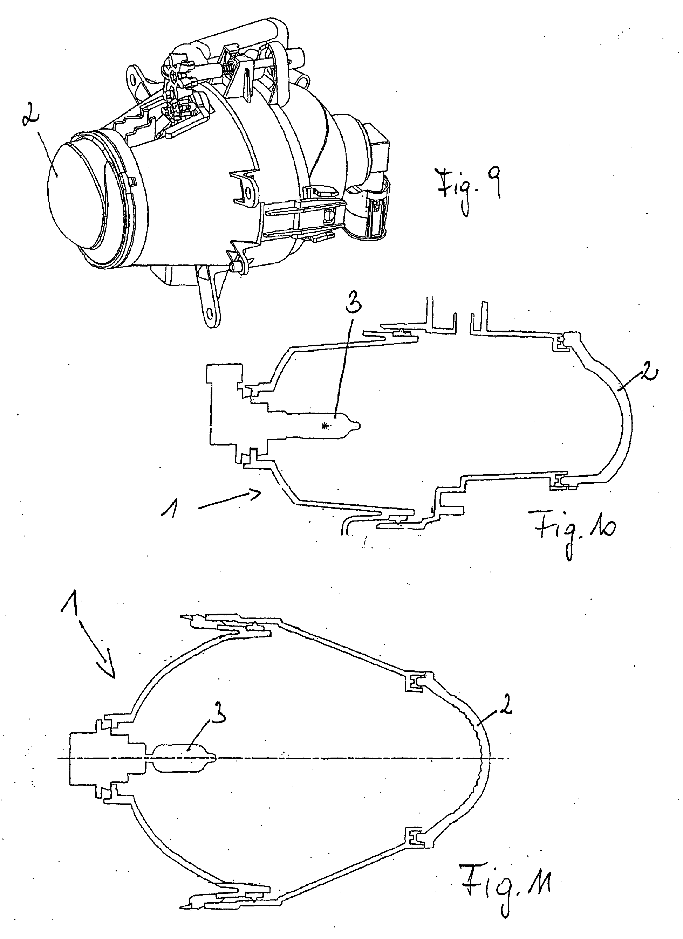

Betreffend die Linse 2 ist es insbesondere von Bedeutung, dass diese zumindest in vertikaler Richtung eine lichtzerstreuende Wirkung hat, wozu diese bei einer zweckmäßigen Ausführungsform in Bezug auf im wesentlichen vertikale Schnitte die Gestalt einer Konkavlinse hat. Bei einer beispielsweise verwendeten Linse handelt es sich um eine sogenannte Meniskenlinse (Konvex-Konkavlinse), deren Ausgestaltung entsprechend den oben beschriebenen Anforderungen numerisch angepasst wird. Bei einer einfachen Ausführungsform der Linse, wie sie beispielweise in Figur 4, 5 sowie in den Figuren 10 und 11, die einen Vertikalschnitt bzw. einen Horizontalschnitt durch eine konkrete Ausführungsform durch einen Scheinwerfer nach der Fig. 9 darstellen, gezeigt ist, ist die Linseninnenfläche 2' als Kugeloberfläche ausgebildet. Davon ausgehend wird vorerst im Zweidimensionalen eine dazupassende äußere Linsenkontur berechnet, welche alle vom vorderen oder hinteren Wendelende F1, F2 über den Reflektor reflektierten und sich in einem Punkt F3 treffenden Strahlen im wesentlichen parallel zur optischen Achse richtet, wie dies den Figuren 2 und 4 zu entnehmen ist. Diese so im Zweidimensionalen errechnete Kontur wird anschließend über eine vertikale Achse Y, die durch den Kugelinnenflächenmittelpunkt KB verläuft, rotiert, sodass sich eine entsprechende Außenfläche 2" der Linse 2 ergibt.

Um ein gesetzeskonformes Lichtbild zu erreichen, ist die Linse in ihren oberen und unteren Bereichen dicker ausgebildet als in einem mittleren Bereich. Dies hat damit zu tun, dass - wie dies auch dem Vertikalschnitt durch den Scheinwerfer nach Fig. 4 gut zu entnehmen ist - Strahlen, die in einem oberen oder unteren Bereich durch die Linse 2 gehen, wie etwa Strahlen S1 von einem hinteren Wendelende über die obere Reflektorhälfte oder Strahlen S2 von einem vorderen Wendelende über die untere Reflektorhälfte, im wesentlichen parallel zu einer Horizontalebene gerichtet werden, während Strahlen, die in einem mittleren Bereich durch die Linse 2 verlaufen, wie etwa Strahlen S3 von einem vorderen Wendelende F2 über die obere Reflektorhälfte keine oder nur eine unwesentliche Ausrichtung zu der Horizontaleben erfahren.

Wie man weiteres der Figur 1, insbesondere aber den Figuren 3 und 5 entnehmen kann, weist die verwendete vorteilhafte Linse 2 hinsichtlich horizontaler Schnitte ein im wesentlichen planparalleles Durchtrittstrittsverhalten der Lichtstrahlen auf, d.h. dass die auf eine Horizontalebene projizierte Komponente der Lichtstrahlen im wesentlichen geradlinig durch die Linse 2 tritt bzw. der aus der Linse 2 austretende Strahl zu dem einfallenden Strahl lediglich in der Horizontalebene ε_{H} parallel verschoben ist, d.h. genaugenommen nur die Projektion des Strahls in die Ebene ε_{H} in dieser Ebene parallel verschoben ist. Auf diese Weise wird eine gute Breitenausleuchtung des vor dem Fahrzeug liegenden Bereiches erzielt. Zusätzlich wird für die Breitenausleuchtung noch der bekannte, sogenannte "Kreuzstrahlereffekt" ausgenutzt, wie dies ebenfalls den Figuren 3 und 5 zu entnehmen ist. Dazu ist der Reflektor so ausgebildet, dass sich von den gegenüberliegenden seitlichen Bereichen des Reflektors stammende Lichtstrahlen hinsichtlich ihrer Projektion auf eine Horizontalebene "überkreuzen", was wie der Zeichnung zu entnehmen ist zu einer guten Breitenausleuchtung führt.

Die Linse 2 ist in einem Bereich zwischen der Lichtquelle 3 und der Brennlinienkurve angeordnet. Für einen größeren Lichtaustritt wird die Linse näher an dem Reflektor angeordnet, ist ein kleinerer Lichtaustritt gewünscht, so kann die Linse in einem entsprechend größeren Abstand zu dem Reflektor angeordnet werden, wodurch sich natürlich die Länge des Scheinwerfersystems erhöht. Generell sind dabei Reflektor und Linse innerhalb gewisser Grenzen im Sinne einer gewünschten und günstigen Lichtverteilung aufeinander abstimmbar. Auch die Form der Linse kann innerhalb gewisser Grenzen hinsichtlich ihrer Dicke sowie Dickenunterschiede variiert werden, um zu einer günstigen Lichtverteilung zu gelangen.

Das gesamte Scheinwerfersystem bestehend aus Lichtquelle, Reflektor und Linse wird in der Einbaulage Fahrzeug bei einer Verwendung als Nebelscheinwerfer wie üblich um 1,14° abgesenkt eingebaut, bei einer Verwendung als Hauptscheinwerfern für Abblendlicht beträgt die Absenkung 0,57°.

Der hier vorgestellte Scheinwerfer hat gegenüber herkömmlichen Freiflächenreflektoren den Vorteil, dass bei gleicher Austrittsfläche durch die Linse mehr Lichtstrom auf die Fahrbahn abgestrahlt wird. Bei herkömmlichen Freiflächensystemen kann für die Erzeugung der Lichtverteilung nur jener Bereich des Reflektors genutzt werden, der sich aus der Projektion der Lichtaustrittsöffnung auf die Reflektoroberfläche ergibt. Durch die Verwendung einer zusätzlichen Zerstreuungslinse wie oben beschrieben kann zusätzlicher Lichtstrom aus den Bereichen ober- und unterhalb dieses Reflektorbereiches genutzt werden kann.

Die seitlichen Flächen außerhalb der Projektion der Lichtaustrittsöffnung wurden auch bisher schon von Freiformsystemen mit Hilfe des oben beschriebenen Kreuzstrahlereffektes genützt, der vorteilhafterweise auch bei dem vorgeschlagenen Scheinwerfer in der Horizontalebene angewendet wird.

Der Vorteil des erfindungsgemäßen Scheinwerfers gegenüber Projektionssystemen, bei welchen der Reflektor ebenfalls einen sehr hohen Lichtstrom umschließen kann, liegt darin, dass das vorgeschlagene System ohne Blendenanordnung und ohne zusätzliches zweites lichtdurchlässiges Medium auskommt, da die Streuscheibe als Linse verwendet werden kann und der Reflektor die Hell-Dunkel-Grenze bildet.

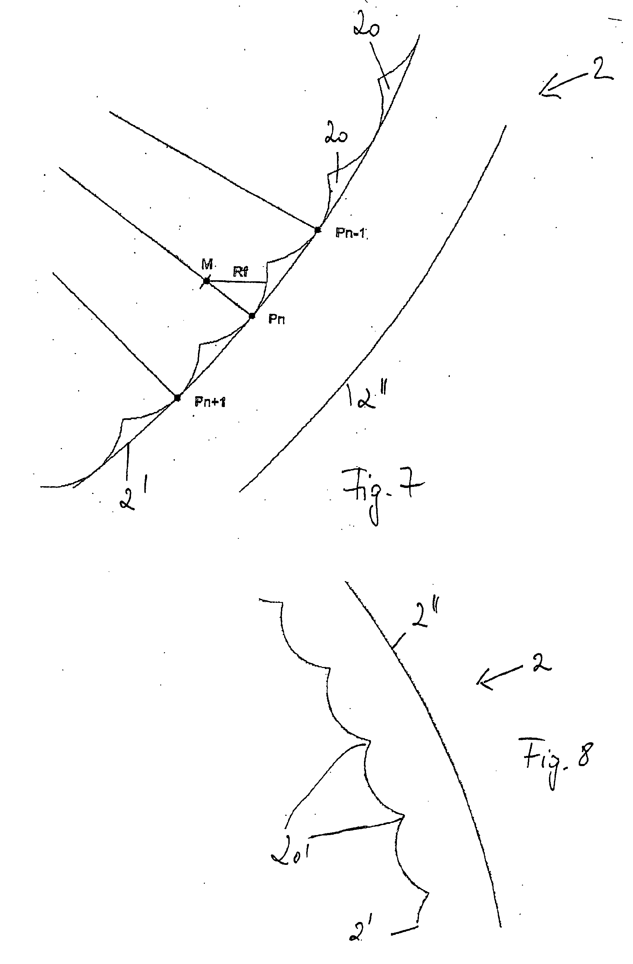

Zusätzlich können an der inneren, dem Reflektor 1 zugewandten Fläche 2' der Linse 2 noch optische Streuelemente angebracht sein, wie beispielsweise Stablinsen. Wie den Figuren 7 und 8 die Horizontalschnitte durch einen Bereich der Linse zeigen, zu entnehmen ist, können die Streuelemente sowohl eine Positiv- als auch eine Negativform aufweisen. Die Streuelemente sind im einfachsten Fall Rillen, die durch einen Kugelfräser entstehen, der sich tangential zur Linseninnenfläche 2' bewegt. Dabei ist wie schon oben beschrieben die Linseninnenfläche 2' im einfachsten Fall eine Kugeloberfläche. Die Fräserbahnen können etwa jeweils in Ebenen parallel zu der Vertikalebene durch die optische Achse verlaufen, wobei beispielsweise die Bahnabstände des Fräsers konstant sind. Die Fräserbahnen können aber auch, wie in der Fig. 7 dargestellt, in Vertikalebenen liegen, welche jeweils durch einen Punkt Pₙ₋₁, ..., Pₙ, ... Pₙ₊₁ etc. auf der Linseninnenfläche und eine vertikalen Rotationsachse, die durch den Kugelmittelpunkt der Linseninnenflächen geht, definiert sind. Mit R_{f} ist dabei in der Zeichnung der Kugelfräserradius bezeichnet, M bezeichnet den zugehörigen Mittelpunkt. Die Linse 2 ist dabei üblicherweise aus Glas oder Kunststoff hergestellt.

Es ist aber weiters auch möglich, die Streuelemente von der Linse getrennt auszubilden, um den gleichen Effekt zu erzielen. Die Streuelemente, beispielsweise in Form einer Stablinsenoptik, können etwa als Stablinsenstreuscheibe ausgebildet sein. Dies hat den Vorteil, dass man die Stablinsenstreuscheibe aus Glas herstellen kann, was auf Grund der hohen Temperaturen im Scheinwerfer von Vorteil ist, während außen für die Linse steinschlagsicherer Kunststoff verwendet wird. Außerdem können auf diese Weise optische Verzerrungen, wie sie bei in der inneren Linsenfläche angebrachten Stablinsen auftreten, vermieden werden. Mit den Streuelementen kann das Lichtbild homogenisiert werden, und außerdem wird eine bessere Breitenausleuchtung erzielt.

Diese Beschreibung bezieht sich auf einen Scheinwerfer mit einer Lichtquelle, welche eine in Fahrtrichtung liegende Wendel aufweist. Genauso gut kann die Erfindung aber beispielsweise auch für eine Lichtquelle mit einer quer zur optischen Achse liegenden Wendel verwendet werden, oder es muss auch gar keine längliche, lineare Lichtquelle verwendet sein, sondern diese kann auch etwa kugelförmig ausgebildet sein.

## Patentansprüche

1. Fahrzeugscheinwerfer mit zumindest einem Freiformreflektor und zumindest einer in einem Bereich eines inneren Brennpunktes angeordneten Lichtquelle, bei dem eine Hell-Dunkelgrenze einer Lichtverteilung durch eine Reflexion im wesentlichen von Licht erzeugt ist, welches aus einem vorderen, dem Reflektor abgewandten Bereich der Lichtquelle über einen unteren Bereich des Reflektors in den Außenraum des Scheinwerfers reflektiert ist, sowie von Licht, welches aus einem hinteren Bereich der Lichtquelle über einen oberen Bereich des Reflektors in den Außenraum des Scheinwerfers reflektiert ist, und der Reflektor (1, R) im Endlichen liegende Brennpunkte (F3, B) aufweist, welche im wesentlichen auf zumindest einer Brennlinienkurve (FK) liegen, wobei in Lichtrichtung vor dem Reflektor (1) und der Lichtquelle (3) zumindest eine Linse (2) angeordnet ist, welche zumindest bereichsweise eine Zerstreuungslinse ist, und wobei die Linse (2) in Lichtrichtung zwischen dem Reflektor (1) und den im Endlichen liegenden Brennpunkten (F3, B) angeordnet ist
**dadurch gekennzeichnet, dass** die Linse (2) zumindest in im wesentlichen vertikaler Richtung eine zerstreuende Wirkung hat.

2. Scheinwerfer nach Anspruch 1, **dadurch gekennzeichnet, dass** der Abstand (d(WB)) innerer Brennpunkt des Reflektors (R) - äußere Brennpunkte (B) bzw. Brennlinienkurve in einem Bereich von 250 mm - 300 mm liegt.

3. Scheinwerfer nach Anspruch 1 oder 2, **dadurch gekennzeichnet, dass** die Linse (2) zumindest hinsichtlich im wesentlichen vertikaler Schnitte eine Konkavlinse ist.

4. Scheinwerfer nach einem der Ansprüche 1 bis 3, **dadurch gekennzeichnet, dass** die Linse (2) eine Meniskenlinse ist.

5. Scheinwerfer nach einem der Ansprüche 1 bis 4, **dadurch gekennzeichnet, dass** der Abstand (d(BL)) Linse (L) - äußere Brennpunkte (B) bzw. Brennlinienkurve zumindest ein Fünftel des Abstandes (d(WB)) innerer Brennpunkt (W) des Reflektors - äußere Brennpunkte (B) bzw. Brennlinienkurve ist.

6. Scheinwerfer nach einem der Ansprüche 1 bis 5, **dadurch gekennzeichnet, dass** der Abstand (d(BL)) Linse (L) - äußerer Brennpunkt (B) bzw. Brennlinienkurve 150 mm beträgt.

7. Scheinwerfer nach einem der Ansprüche 1 bis 6, **dadurch gekennzeichnet, dass** der Abstand (d(WL)) Linse (L) - innerer Brennpunkt (W) des Reflektors bzw. Lichtquellenmitte 120 mm beträgt.

8. Scheinwerfer nach einem der Ansprüche 1 bis 7, **dadurch gekennzeichnet, dass** eine dem Reflektor (1) zugewandte Innenfläche (2') der Linse (2) das Segment einer Kugeloberfläche ist, und eine Außenfläche (2") der Linse (2) von einem vorderen/hinteren Bereich der Lichtquelle (3) stammende, in dem Brennpunkt fokussierte Lichtstrahlen (S1, S2, SO, SU) im wesentlichen parallel zu einer Horizontalebene ausrichtet.

9. Scheinwerfer nach einem der Ansprüche 1 bis 8, **dadurch gekennzeichnet, dass** die Linse (2) hinsichtlich horizontaler Schnitte im wesentlichen planparalleles Austrittsverhalten der durchtretenden Lichtstrahlen hat.

10. Scheinwerfer nach einem der Ansprüche 1 bis 9, **dadurch gekennzeichnet, dass** die Linse (2) an zumindest einer Linsenfläche (2') optische Streuelemente (20, 20') hat.

11. Scheinwerfer nach Anspruch 10, **dadurch gekennzeichnet, dass** die optischen Streuelemente (20, 20') an der Linseninnenfläche (2') vorgesehen sind.

12. Scheinwerfer nach einem der Ansprüche 1 bis 11, **dadurch gekennzeichnet, dass** in Lichtrichtung vor der Linse eine Scheibe angeordnet ist, welche auf zumindest einer Seite optische Streuelemente aufweist.

13. Scheinwerfer nach einem der Ansprüche 10 bis 12, **dadurch gekennzeichnet, dass** die Streuelemente Vertiefungen (20') und/oder Erhebungen (20) sind.

14. Scheinwerfer nach einem der Ansprüche 10 bis 12, **dadurch gekennzeichnet, dass** die Streuelemente Stablinsen sind.

15. Scheinwerfer nach einem der Ansprüche 10 bis 14, **dadurch gekennzeichnet, dass** die Streuelemente eine oder mehrere Rillen sind.

16. Scheinwerfer nach Anspruch 15, **dadurch gekennzeichnet, dass** die Rillen im wesentlichen parallel zu einer Vertikalebene durch die optische Achse verlaufen.

17. Scheinwerfer nach einem der Ansprüche 1 bis 16, **dadurch gekennzeichnet, dass** die Linse (2) in einem oberen und/oder unteren Bereich dicker ist als in einem mittleren Bereich.

## Claims

1. A vehicle headlamp having at least one free-form reflector and at least one light source disposed in the region of an inner focal point, wherein the light-dark boundary of a light distribution is produced, by reflection of substantially light reflected from a front region of the light source remote from the reflector via a lower region of the reflector into the environment of the headlamp, and by light which is reflected from a rear region of the light source via an upper region of the reflector into the environment of the headlamp, and the reflector (1, R) has finite focal points (F3, B) which lie substantially on at least one focal line contour (FK), wherein at least one lens (2) is disposed, as regarded in the direction of the light beam, in front of the reflector (1) and the light source (3), which lens is at least in certain regions thereof a diverging lens, and said lens (2) is disposed, as regarded in the direction of the light beam, between the reflector (1) and the finite focal points (F3, B),
**characterized in that** said lens (2) displays a diffusing effect at least in a substantially vertical direction.

2. A headlamp as defined in claim 1, **characterized in that** the distance (d(WB)) from the inner focal point of said reflector (R) to the outer focal points (B) or focal line contour is in the region of from 250 mm to 300 mm.

3. A headlamp as defined in claim 1 or claim 2, **characterized in that** said lens (2) is a concave lens at least with respect to substantially vertical cross sections.

4. A headlamp as defined in any one of claims 1 to 3, **characterized in that** said lens (2) is a meniscus lens.

5. A headlamp as defined in any one of claims 1 to 4, **characterized in that** the distance (d(BL)) from the lens (L) to the outer focal points (b) or focal line contour is at least one fifth of the distance (d(WB)) from the inner focal point (W) of the reflector to the outer focal points (B) or focal line contour.

6. A headlamp as defined in any one of claims 1 to 5, **characterized in that** the distance (d(BL)) from the lens (L) to the outer focal point (B) or focal line contour is 150 mm.

7. A headlamp as defined in any one of claims 1 to 6, **characterized in that** the distance (d(WL)) from the lens (L) to the inner focal point (W) of the reflector or the center of the light source is 120 mm.

8. A headlamp as defined in any one of claims 1 to 7, **characterized in that** an inner surface (2') of said lens (2) facing the reflector (1) is the segment of a spherical surface, and an external surface (2") of said lens (2) aligns light rays (S1, S2, SO, SU) coming from a front/rear region of the light source (3) and focussed in the focal point so that they are substantially parallel to a horizontal plane.

9. A headlamp as defined in any one of claims 1 to 8, **characterized in that** the light rays passing through said lens (2) emerges in a substantially plane-parallel manner with respect to horizontal cross sections.

10. A headlamp as defined in any one of claims 1 to 9, **characterized in that** said lens (2) has optical diffusion elements (20, 20') on at least one lens surface (2').

11. A headlamp as defined in claim 10, **characterized in that** said optical diffusion elements (20, 20') are provided on the internal surface of the lens (2').

12. A headlamp as defined in any one of claims 1 to 11, **characterized in that** a disk is positioned in front of the lens, as regarded in the direction of the light beam, which disk displays optical diffusion elements on at least one side thereof.

13. A headlamp as defined in any one of claims 10 to 12, **characterized in that** said diffusion elements consist of hills (20) and/or valleys (20').

14. A headlamp as defined in any one of claims 10 to 12, **characterized in that** said diffusion elements are rod lenses.

15. A headlamp as defined in any one of claims 10 to 14, **characterized in that** said diffusion elements are one or more grooves.

16. A headlamp as defined in claim 15, **characterized in that** said grooves run substantially parallel to a vertical plane extending through the optical axis.

17. A headlamp as defined in any one of claims 1 to 16, **characterized in that** said lens (2) is thicker in an upper and/or lower region than in a central region.

## Revendications

1. Projecteur pour véhicule comprenant au moins un réflecteur de forme libre et au moins une source lumineuse disposée dans une zone d'un point focal interne, dans lequel une limite clair-obscur d'une distribution de lumière est générée par une réflexion pour l'essentiel de lumière qui est réfléchie, à partir d'une zone avant de la source lumineuse tournée à l'opposé du réflecteur, via une zone inférieure du réflecteur, dans l'espace externe du projecteur, ainsi que de lumière qui est réfléchie, à partir d'une zone arrière de la source lumineuse, via une zone supérieure du réflecteur, dans l'espace externe du projecteur, et dans lequel le réflecteur (1, R) présente des points focaux (F3, B) situés au fini, lesquels sont situés pour l'essentiel sur au moins une courbe focale (FK), au moins une lentille (2) étant disposée devant le réflecteur (1) et la source lumineuse (3) dans la direction de la lumière, laquelle est tout au moins par zones une lentille divergente, et la lentille (2) étant disposée entre le réflecteur (1) et les points focaux (F3, B) situés au fini dans la direction de la lumière.

2. Projecteur selon la revendication 1, **caractérisé en ce que** la distance (d(WB)) point focal interne du réflecteur (R) - points focaux externes (B) et/ou courbe focale se situe dans une plage allant de 250 mm à 300 mm.

3. Projecteur selon la revendication 1 ou 2, **caractérisé en ce que** la lentille (2) est, tout au moins en ce qui concerne des coupes pour l'essentiel verticales, une lentille concave.

4. Projecteur selon l'une quelconque des revendications 1 à 3, **caractérisé en ce que** la lentille (2) est une lentille ménisque.

5. Projecteur selon l'une quelconque des revendications 1 à 4, **caractérisé en ce que** la distance (d(BL))lentille (L) - points focaux externes (B) et/ou courbe focale est d'au moins un cinquième de la distance (d(WB)) point focal interne (W) du réflecteur - points focaux externes (B) et/ou courbe focale.

6. Projecteur selon l'une quelconque des revendications 1 à 5, **caractérisé en ce que** la distance (d(BL)) lentille (L) - points focaux externes (B) et/ou courbe focale est de 150 mm.

7. Projecteur selon l'une quelconque des revendications 1 à 6, **caractérisé en ce que** la distance (d(WL)) lentille (L) - point focal interne (W) du réflecteur et/ou milieu de la source lumineuse est de 120 mm.

8. Projecteur selon l'une quelconque des revendications 1 à 7, **caractérisé en ce qu'**une surface interne (2') de la lentille (2) tournée vers le réflecteur (1) est le segment d'une surface sphérique et **en ce qu'**une surface externe (2") de la lentille (2) aligne des rayons lumineux (S1, S2, So, SU) focalisés dans le point focal et émanant d'une zone avant / arrière de la source lumineuse (3) essentiellement parallèlement à un plan horizontal.

9. Projecteur selon l'une quelconque des revendications 1 à 8, **caractérisé en ce que** la lentille (2) présente, en ce qui concerne des coupes horizontales, un comportement de sortie des rayons lumineux passants pour l'essentiel plan-parallèle.

10. Projecteur selon l'une quelconque des revendications 1 à 9, **caractérisé en ce que** la lentille (2) comporte sur au moins une surface de lentille (2') des éléments de diffusion optique (20, 20').

11. Projecteur selon la revendication 10, **caractérisé en ce que** les éléments de diffusion optique (20, 20') sont prévus sur la surface interne de la lentille (2').

12. Projecteur selon l'une quelconque des revendications 1 à 11, **caractérisé en ce qu'**un disque est disposé avant la lentille dans la direction de la lumière, lequel présente des éléments de diffusion optique sur au moins un côté.

13. Projecteur selon l'une quelconque des revendications 10 à 12, **caractérisé en ce que** les éléments de commande sont des creux (20') et/ou des bosses (20).

14. Projecteur selon l'une quelconque des revendications 10 à 12, **caractérisé en ce que** les éléments de diffusion sont des lentilles à barre.

15. Projecteur selon l'une quelconque des revendications 10 à 14, **caractérisé en ce que** les éléments de diffusion sont une ou plusieurs rainures.

16. Projecteur selon la revendication 15, **caractérisé en ce que** les rainures courent pour l'essentiel parallèlement à un plan vertical à travers l'axe optique.

17. Projecteur selon l'une quelconque des revendications 1 à 16, **caractérisé en ce que** la lentille (2) est plus épaisse dans une zone supérieure et/ou dans une zone inférieure que dans une zone médiane.
